# FASCICULE DE BREVET EUROPEEN

(11) **EP 3 628 063 B1**
(45) Date de publication et mention de la délivrance du brevet: **26.10.2022**
(21) Numéro de dépôt: 18718612.7
(22) Date de dépôt: 04.04.2018
(51) Int. Cl.: F16B 5/10, B60R 13/08, F16B 21/04, F16B 21/08

(54) **ENSEMBLE AVEC ÉLÉMENT DE FIXATION AMOVIBLE POUR CARÉNAGE DE VÉHICULE AUTOMOBILE ET PROCÉDÉ**
SYSTEM MIT ENTFERNBAREM BEFESTIGUNGSELEMENT FÜR KRAFTFAHRZEUGVERKLEIDUNG UND VERFAHREN
ASSEMBLY WITH REMOVABLE FASTENER FOR MOTOR VEHICLE FAIRING AND METHOD

(30) Priorité: 27.04.2017 FR 1753665
(43) Date de publication de la demande: 01.04.2020
(73) Titulaire: Renault s.a.s, 92100 Boulogne Billancourt (FR); Nissan Motor Co., Ltd., Yokohama-shi, Kanagawa 221-0023 (JP)
(72) Inventeur: BERARD, Laurent, 78660 Ablis (FR)
(74) Mandataire: Renault Group
(86) Numéro de dépôt international: PCT/FR2018/050836
(87) Numéro de publication internationale: WO 2018/197769

(56) Documents cités:
- EP-A1- 1 626 186
- WO-A1-2014/119366
- DE-A1-102010 004 848
- JP-A- 2000 009 117

## Description

L'invention a pour objet l'assemblage de pièces fonctionnelles sur une caisse de véhicule automobile, et plus particulièrement, l'assemblage entre elles de pièces surfaciques, tels que des éléments de carénage à assembler par exemple sur le dessous d'une caisse de véhicule automobile.

Un assemblage démontable de deux pièces surfaciques, telles que deux tôles entre elles, peut être obtenu de manière connue, à l'aide de pièces de fixation de type quart de tour. La pièce de fixation de type quart de tour comporte typiquement une portion de centrage, à partir de laquelle s'étendent radialement deux appendices de verrouillage. L'une des tôles à assembler est percée d'un orifice de forme adaptée pour pouvoir y insérer la pièce de fixation dans une première position angulaire, et pour retenir axialement la pièce de fixation une fois que celle-ci a été tournée d'un angle qui peut typiquement correspondre à un quart de tour.

Pour assembler par exemple un carénage sur un dessous de caisse de véhicule, on se trouve confronté à un certain nombre de contraintes lors du positionnement des orifices permettant d'insérer les pièces de fixation au travers du carénage et de la caisse : la caisse est percée de nombre de trous de pilotage destinés à permettre de manipuler et centrer la caisse lors de son trajet en usine. Ces trous de pilotage doivent être par la suite équipés d'obturateurs étanches, destinés notamment par exemple à prévenir l'infiltration de fluides corrosifs au travers de la caisse vers l'intérieur du véhicule. Le positionnement des pièces de fixation doit prendre en compte l'encombrement des trous de pilotage, en plus des proximités locales plus ou moins favorables, entre le carénage et le dessous de caisse. Le document DE 10 2010 004848 A1 décrit une pièce de fixation connue pour un assemblage démontable tôle sur tôle connu.

Du fait de ces différentes contraintes, le positionnement des trous adaptés pour les pièces de fixation est délicat.

Il existe un besoin pour des géométries de carénage et/ou des géométries de pièces de fixation associées, permettant de prendre en compte ces différentes contraintes.

A cette fin, il est proposé un ensemble selon la revendication 1 comprenant une pièce de fixation pour assemblage démontable tôle sur tôle, la pièce de fixation comprenant :
- une portion cylindrique de centrage s'étendant axialement entre une première extrémité et une deuxième extrémité,
- un groupe d'au moins deux pattes de clipsage s'étendant axialement à partir de la première extrémité, les pattes de clipsage portant des ergots de verrouillage tournés radialement vers l'extérieur,
- une portion d'appui, s'étendant radialement à partir de la deuxième extrémité.

La pièce comporte en outre un groupe d'au moins deux appendices de verrouillage s'étendant radialement à partir de la première extrémité de la portion de centrage, la portion d'appui comportant au moins deux zones de retenue s'étendant radialement vers l'extérieur de la portion de centrage, chacune sur au moins un secteur angulaire situés entre les appendices de verrouillage.

Ces deux premières zones de retenue permettent d'arrêter la progression de la pièce lors de son insertion dans une portion de tôle ou lors de l'insertion successive de la pièce dans deux portions de tôle disposées l'une sur l'autre.

Selon un mode de réalisation préféré, la portion d'appui comprend en outre au moins deux secondes zones de retenues présentant un recouvrement angulaire chacune avec un appendice de verrouillage différent, de manière à permettre de verrouiller la pièce axialement suivant deux directions opposées par rapport à une tôle intercalée entre les appendices de verrouillage et les secondes zones de retenue.

La portion d'appui peut être par exemple une couronne débordant radialement de la portion de centrage et s'étendant à 360° autour de la portion de centrage.

Avantageusement, la distance axiale entre les appendices de verrouillage et la portion d'appui est conçue pour permettre de verrouiller, par rotation d'une portion de tour de la pièce de fixation, une pièce de type tôle entre les appendices de verrouillage et la portion d'appui.

Pour permettre ce verrouillage, la pièce de type tôle peut comporter une ouverture de forme adaptée pour y insérer la portion cylindrique ainsi que les appendices de verrouillage, tout en s'opposant au passage au travers de l'ouverture de la portion d'appui.

Avantageusement, le groupe d'appendices de verrouillage peut comprendre un groupe de deux languettes radiales, un groupe de trois languettes radiales ou un groupe de quatre languettes radiale par exemple, pour permettre respectivement un verrouillage de type ¼ tour, 1/6 tour ou de type 1/8 de tour.

La pièce de type tôle peut être une portion de tôle métallique ou une portion d'une pièce d'habillage formant coque et réalisée en matériau polymère ou composite, par exemple une portion de carénage de dessous de véhicule.

La portion de centrage cylindrique permet de centrer la pièce pour le verrouillage d'une tôle entre les appendices de verrouillage et la portion d'appui. La portion de centrage cylindrique également de centrer la pièce pour l'insertion des pattes de clipsage dans un orifice d'une autre tôle, située sous la tôle précédente dans le sens d'insertion de la pièce au travers des deux tôles.

Selon un mode de réalisation avantageux, la portion d'appui peut former une couronne plane autour de la portion cylindrique de centrage.

Selon un autre mode de réalisation, la portion d'appui peut comporter plusieurs ailes d'appui dont chacune s'étend au moins en partie radialement à partir de la portion cylindrique de centrage.

Par portion cylindrique, on entend une portion cylindrique au sens large, c'est-à-dire une portion dont la surface extérieure est engendrée par des lignes génératrices parallèles à une direction commune, désignée ici par "direction axiale". Le contour de la section cylindrique peut ainsi s'appuyer sur un contour circulaire, hexagonal, carré, triangulaire, en croix, en étoile.

De manière préférentielle, le contour de la section circulaire est circulaire ou sensiblement circulaire.

Par axialement, on entend parallèlement à une direction des droites génératrices de la portion cylindrique. Par radialement, on entend perpendiculairement à cette direction. Par plan axial, on entend un plan géométrique comprenant une direction parallèle aux génératrices du cylindre. Par direction radiale, d'un cylindre à symétrie centrale, on entend une direction perpendiculaire à l'axe central du cylindre, interceptant l'axe du cylindre. Par plan radial, on entend un plan perpendiculaire à la direction des génératrices du cylindre. Par direction orthoradiale passant par un point, ou direction circonférentielle passant par un point, en présence d'un cylindre à symétrie centrale, on entend une direction comprise dans un plan perpendiculaire aux génératrices du cylindre, et perpendiculaire à une direction radiale du cylindre passant par ce point.

Selon un mode de réalisation avantageux, un motif en creux pour insérer un outil est ménagé au centre de la section de centrage cylindrique, et la pièce se termine axialement au niveau de la portion d'appui.

Selon un autre mode de réalisation avantageux, un renfoncement est ménagé au centre de la section cylindrique, et au moins un relief transversal s'élève au dessus du fond du renfoncement, de manière à former un levier d'actionnement en rotation, pour faciliter l'application manuelle d'un couple de rotation sur la pièce.

La hauteur du relief peut être limitée pour que celui-ci reste de niveau avec la portion d'appui. Ce mode de réalisation permet de limiter l'encombrement axial de la pièce d'assemblage, et de limiter le relief que forme la pièce par rapport à la surface d'une portion de tôle que la pièce maintient sur une autre portion de tôle.

Selon un autre mode de réalisation, le relief transversal dépasse axialement au dessus de l'extrémité axiale de la portion cylindrique, pour en faciliter la préhension. Avantageusement, la hauteur maximale du relief transversal peut rester inférieure ou égale à deux fois la profondeur maximale du renfoncement, pour limiter l'encombrement axial du dispositif.

Selon encore un autre mode de réalisation, la portion de centrage peut ne pas comporter de creux central.

Le relief transversal peut alors dépasser axialement à partir d'une surface d'extrémité, sensiblement radiale, correspondant à une deuxième extrémité axiale de la portion d'appui.

La pièce peut ainsi comporter une portion de centrage pleine, mécaniquement plus résistante qu'une portion évidée, par exemple une portion de centrage formant un cylindre convexe plein, ou un cylindre en étoile.

Les pattes de clipsage sont incluses dans un volume cylindrique de même direction axiale que la portion de centrage, le contour géométrique de ce volume cylindrique étant obtenu en superposant le contour de la portion de centrage et le contour des appendices de verrouillage. Avantageusement, les pattes de clipsage sont même comprises dans un volume cylindrique de même direction axiale que la portion de centrage, et dont le contour correspond à celui de la seule section de la portion de centrage. Il est ainsi possible d'insérer la pièce au travers de deux ouvertures superposées de deux tôles, les pattes de clipsage interagissant uniquement avec la seconde tôle dans l'ordre d'insertion, ce qui améliore l'efficacité du clipsage sur ladite seconde tôle.

Chaque patte de clipsage peut comporter une base de patte sensiblement axiale, flexible pour être déviée radialement, et comporte à une extrémité libre de la patte, un ergot de verrouillage, chaque ergot de verrouillage présentant, orientées radialement vers l'extérieur :
- au moins une première surface oblique déflectrice, convergeant vers l'axe de la pièce dans le sens allant vers l'extrémité libre des pattes,
- au moins une surface de rétention de clipsage, se projetant axialement sous la première surface oblique déflectrice, et au niveau de laquelle l'ergot forme, en section par un plan axial, un angle rentrant avec la base de la patte.

Les surfaces obliques déflectrices permettent ainsi de forcer une déflexion des pattes vers le centre de la pièce lors d'une insertion de la pièce par les pattes, dans un orifice dont le contour intercepterait les premières surfaces obliques des pattes.

Les surfaces de rétention de clipsage permettent de verrouiller axialement la pièce lors d'un appui des ergots de verrouillage sur le bord d'un orifice, dans le sens d'extraction de la pièce hors de l'orifice.

Avantageusement, l'angle rentrant est un angle d'amplitude inférieure ou égale à 90°.

Par surface oblique ou direction oblique, on entend ici une surface ou une direction qui n'est ni parallèle ni perpendiculaire à la direction axiale des génératrices de la portion de centrage cylindrique.

Selon un mode de réalisation préféré, les ergots de verrouillage des pattes présentent en outre chacun une surface oblique de libération, la surface oblique de libération prolongeant radialement vers l'extérieur la surface de rétention de clipsage, et s'évasant en direction de l'extrémité libre de la patte de clipsage.

On peut ainsi provoquer une déflexion des pattes vers l'axe de la pièce, lors que l'on vient mettre en appui les surfaces obliques de libération sur le bord d'un orifice dans lequel les pattes sont insérées, puis extraire la pièce de l'orifice.

Les surfaces de rétention de clipsage des appendices de verrouillage, s'étendent de préférence dans un plan radial.

Avantageusement, les surfaces obliques de libération s'étendent axialement entre les surfaces de rétention de clipsage et les premières surfaces obliques déflectrices.

La pièce de fixation peut comprendre en outre une portion d'accostage axialement compressible, s'étendant à partir de la première extrémité axiale de la portion de centrage autour des pattes de clipsage, dans un périmètre limité par le périmètre de la portion cylindrique de centrage.

De manière avantageuse, la portion d'accostage compressible est comprise axialement entre la première extrémité de la portion cylindrique de centrage, et le point des surfaces de rétention de clipsage axialement le plus proche de cette première extrémité.

La portion d'accostage axialement compressible peut avantageusement être conçue pour former, ensemble avec la première extrémité de la portion cylindrique de centrage, un bouchon d'obturation étanche vis-à-vis d'un orifice au travers duquel sont insérées les pattes de clipsage de la pièce.

La portion d'accostage axialement compressible peut avantageusement former une coupelle sensiblement tronconique autour des pattes de clipsage.

Par coupelle sensiblement, tronconique, on entend ici une coupelle formée par une membrane d'épaisseur constante ou d'épaisseur variable, présentant une symétrie centrale autour d'un axe de symétrie central de la portion cylindrique de centrage, et s'évasant de préférence en direction de l'extrémité libre des pattes pour venir s'appuyer sur les rebords d'un orifice dans lequel les pattes sont insérées. La membrane peut par exemple présenter une surface extérieure correspondant à une portion de cône de révolution.

Les appendices de verrouillage et l'extrémité d'appui sont de préférence monoblocs avec la portion cylindrique de centrage et avec les pattes de clipsage. Selon un autre mode de réalisation, les appendices de verrouillage peuvent être formés par exemple par des lames traversant la portion cylindrique de centrage.

La membrane peut être avantageusement monobloc avec la portion cylindrique de centrage et avec les pattes de clipsage.

Selon un autre mode de réalisation, la portion d'accostage axialement compressible peut être réalisée par dépôt d'un cordon compressible autour des pattes sur la première extrémité de la portion cylindrique de centrage.

Selon un mode de réalisation préféré, chaque patte de clipsage comporte :
- une lame support de direction axiale se dressant à partir de la première extrémité de la portion de centrage, la lame support étant perpendiculaire à un plan géométrique radial interceptant la lame support,
- au moins une lame de verrouillage de direction axiale, s'étendant perpendiculairement à partir de la lame support à l'extrémité libre de la lame support, la lame de verrouillage présentant un premier bord oblique définissant au moins une portion de la première surface oblique déflectrice de la patte, et présentant un deuxième bord perpendiculaire à la lame support, le deuxième bord perpendiculaire définissant au moins une portion de la surface de rétention de clipsage de la patte de clipsage.

Avantageusement, la lame de verrouillage s'étend dans un plan axial, ledit plan géométrique comprenant une direction axiale.

Avantageusement, la lame de verrouillage peut en outre comporter, entre le premier bord ou bord oblique et le deuxième bord ou bord perpendiculaire, un troisième bord ou bord de libération, également oblique pour former une portion de la ou des surfaces obliques de libération de l'ergot de la patte. L'inclinaison du troisième bord oblique de libération par rapport à la direction axiale, peut être supérieure ou égale à l'inclinaison du premier bord oblique par rapport à la direction axiale. Par exemple, l'inclinaison du troisième bord oblique de libération par rapport à la direction axiale, peut être sensiblement égale à l'inclinaison du premier bord oblique par rapport à la direction axiale, majorée de 0 à 15° d'angle, avantageusement majorée d'une valeur comprise entre 0 et 5°. L'inclinaison du premier bord oblique par rapport à la direction axiale peut être par exemple comprise entre 30° et 50°, avantageusement entre 40° et 50°, par exemple égal à 45°. Selon un mode de réalisation préféré, chaque lame support porte deux lames de verrouillage de contours similaires, disposées en miroir l'une de l'autre de part et d'autre de la largeur de la lame support.

Selon un mode de réalisation avantageux, les deuxièmes bords perpendiculaires de chacune des lames de verrouillage sont reliés par une portion de plan de liaison, augmentant ainsi la surface de rétention de clipsage de la patte, et augmentant la résistance à une déflexion de la lame de verrouillage par rapport à la lame support.

La lame support peut présenter une épaisseur réduite sur une portion comprise entre la base de la lame et la portion axiale portant les lames de verrouillage. On obtient ainsi une bonne flexibilité de la patte près de la base de la patte, et une bonne rigidité de la portion d'ancrage de la patte, c'est-à-dire de la portion axiale portant le ergot de verrouillage formée par la ou les lames de verrouillage, plus, éventuellement, par la portion de plan de liaison. Cette géométrie est en outre bien réalisable par moulage par injection plastique.

On peut envisager des variantes de réalisation avec des formes différentes de pattes de clipsage, par exemple des pattes de clipsage dont la base est une tige de section non plane, ou forme une lame ou un assemblage de lames non orthoradiales.

L'invention s'applique aussi à un ensemble de dessous de caisse pour véhicule automobile, l'ensemble comprenant :
- une pièce de fixation telle que décrite précédemment,
- une première tôle comportant une ouverture polygonale, la périodicité de l'ouverture polygonale correspondant au nombre de pattes de clipsage, de la pièce de fixation,
- une deuxième tôle comportant une ouverture adaptée à un verrouillage, de type par portion de tour, entre les appendices de verrouillage et la portion d'appui de la pièce de fixation.

La première tôle peut être une portion de châssis du véhicule, la deuxième tôle peut être un carénage destiné à protéger la caisse par l'extérieur. La pièce de fixation peut être conçue pour venir assembler la deuxième tôle sous la première tôle en insérant la pièce par-dessous le véhicule, au travers de la deuxième tôle puis au travers de la première tôle.

Avantageusement, la première tôle est une tôle métallique, et la deuxième tôle est une tôle de type polymère ou composite à matrice polymère. La pièce d'assemblage permet alors de réaliser une étanchéité au niveau d'une face supérieure de la première tôle, pour protéger celle-ci de l'intrusion de fluides corrosifs par la face inférieure du véhicule.

Les rebords de type bords tombés souvent présents sur les découpes de tôles métalliques, sont favorable à un appui franc des ergots de verrouillage de pattes de clipsage.

Le verrouillage de type par portion de tour, est en revanche plus adapté au maintien d'une tôle de type polymère, car il permet une surface d'appui plus large entre la pièce de fixation et la tôle, ce qui permet d'obtenir un position de la pièce de fixation par rapport à la deuxième tôle qui n'est pas trop tributaire de légers écarts dimensionnels dans la réalisation de la deuxième tôle.

L'ouverture polygonale peut être un orifice de guidage de la caisse servant en outre à guider la caisse lors de des manipulations robotisées de la caisse sur la chaîne de montage. De tels orifices à contours sensiblement carrés existent sur de nombreuses caisses de véhicule, et nécessitent alors la pose de bouchon d'étanchéité avant la mise en service du véhicule.

Est également proposé un procédé d'assemblage d'un carénage de dessous de caisse automobile, suivant la revendication 9 et comprenant les étapes suivantes :
- fournir un châssis de véhicule présentant une première portion de tôle percée d'une ouverture polygonale,
- fournir une coque destinée à protéger, au moins localement, la première portion de tôle, et comportant une ouverture à découpes radiales, l'ouverture à découpes radiale comprenant une découpe centrale plus large que l'ouverture polygonale, et des découpes s'étendant radialement à partir de la découpe centrale,
- fournir une pièce de fixation telle que décrite précédemment,
- placer l'ouverture à découpes radiales par-dessus l'ouverture polygonale,
- introduire la pièce de fixation au travers de l'ouverture à découpes radiales de manière à faire passer les appendices de verrouillage au travers des ouvertures radiales, et à faire passer les pattes de clipsage, au travers de l'ouverture polygonale,
- tourner la pièce de fixation d'une portion de tour autour d'un axe central de la pièce, de manière à ce que les appendices de verrouillage ne puissent plus traverser l'ouverture à découpe radiale, et de manière, de préférence, à placer chaque patte de verrouillage face à un milieu d'un bord sensiblement rectiligne de l'ouverture polygonale.

Avantageusement, lors de l'introduction de la pièce au travers de la première portion de tôle et de la coque, on insère axialement la pièce jusqu'à ce que la portion d'appui vienne en butée axiale contre les bords de l'ouverture à découpe radiale de la coque.

Avantageusement, les bases des pattes viennent alors en appui radial sur les bords de l'ouverture polygonale.

Avantageusement, il est possible d'appuyer axialement sur la pièce de fixation en même temps que l'on effectue la rotation de la portion de tour, de manière à plaquer la deuxième tôle sur la première tôle, en comprimant au besoin une portion d'accostage axialement compressible de la pièce, située sur la pièce de fixation entre les deux tôles, l'appui axial permettant de maintenir les ergots de verrouillage au-delà de la première tôle pendant la rotation. Quelques buts, caractéristiques et avantages de l'invention apparaîtront à la lecture de la description suivante, donnée uniquement à titre d'exemple non limitatif, et faite en référence aux figures annexées sur lesquelles :
- la figure 1 illustre une portion de dessous de caisse automobile prête à recevoir une pièce de carénage munie d'un dispositif de fixation selon l'art antérieur,
- la figure 2 est une vue schématique en coupe d'une pièce de carénage assemblée sur une caisse de véhicule à l'aide d'une pièce de fixation selon l'invention,
- la figure 3 est une vue schématique en perspective de la pièce de fixation visible en figure,
- la figure 4 est une vue simplifiée en perspective en coupe partielle de la pièce de fixation illustré en figure 2,
- les figures 5 a et 5b sont respectivement une vue côté caisse et une vue coté carénage de la pièce de fixation selon l'invention dans une position angulaire correspondant à la mise en place de la pièce de fixation,
- les figures 5c, 5d sont respectivement des vues côté caisse et côté carénage de la même pièce dans une positon de verrouillage.

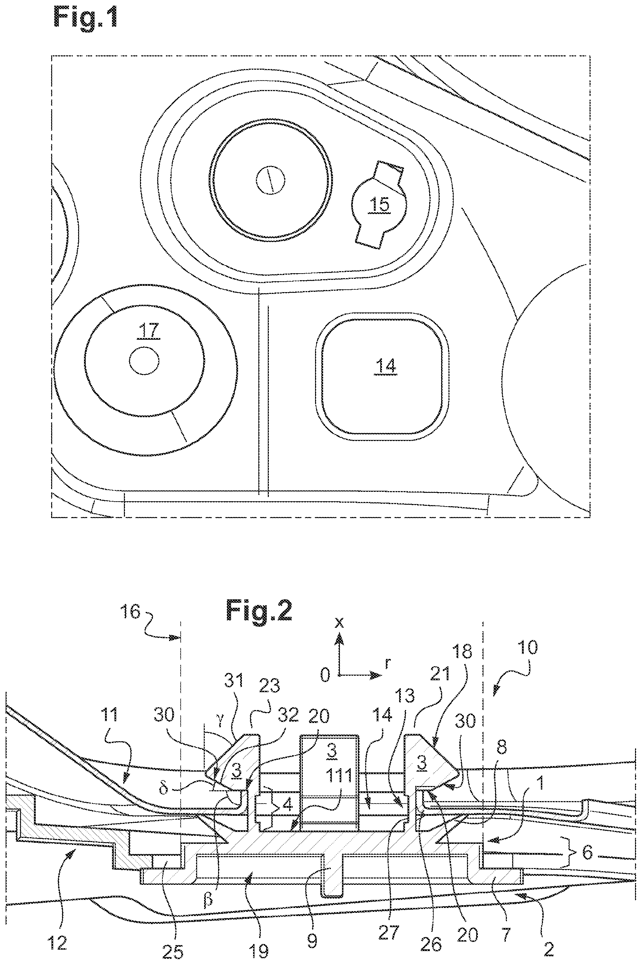

Tel que visible sur la figure 1, une portion 11 de tôle de dessous de caisse de véhicule automobile comporte une ouverture 14 faisant office de trou de pilotage de la caisse en usine, l'ouverture 14 permettant de détecter la position de la caisse et également de manipuler celle-ci. Une ouverture 14 voisine est ici obturée par un obturateur 17 de type connu, formant bouchon par rapport au trou 14. Dans l'exemple illustré, la tôle 11 comporte également un trou de fixation 15 dédié à une fixation connue de l'art antérieur, de type quart de tour. Afin de tenir compte de l'épaisseur du bouchon 17, le trou de fixation 15 est ménagé au travers d'un bossage permettant d'amener le plan de la tôle au-dessus du bouchon 17.

Comme on le devine sur la figure 1, on peut être amené à positionner, de manière rapprochée, des trous de fixation 15, au voisinage immédiat des trous de pilotage de caisse 14, ce qui, d'une part peut affaiblir structurellement la tôle de caisse, et d'autre part peut imposer de créer des bossages dédiés aux zones d'appui, par exemple d'un carénage.

La figure 2 illustre une configuration d'assemblage d'une portion de carénage 12 sur une portion de dessous de caisse 11, utilisant une pièce de fixation 10 selon l'invention. La portion de dessous de caisse 11 peut être par exemple réalisée en tôle d'acier.

Tel qu'illustré en figure 2, le carénage 12 est traversé d'un orifice de fixation 25 selon l'invention qui est superposable au moins partiellement à l'ouverture polygonale 14 de la portion de caisse 11 dans la position prévue d'assemblage du carénage.

Le trou de pilotage 14 présente ici, comme sur la figure 1, une forme d'ouverture polygonale, sous forme d'un carré dont les angles sont arrondis. D'une manière plus générale, l'ouverture 14 peut présenter un contour présentant quatre bords perpendiculaires entre eux, équidistants d'un centre de l'ouverture, le restant des contours de l'ouverture étant inscrit dans le carré correspondant à ces quatre côtés.

L'ouverture polygonale peut être par exemple un octogone correspondant à un carré dont les coins auraient été tronqués. Avantageusement l'ouverture polygonale peut présenter des bords tombés 26 tournés à l'opposé du carénage 12.

La pièce de fixation 10 selon l'invention comporte une portion 7 d'appui, ici sous forme d'une couronne d'appui, venant s'appuyer sur un contour plan du carénage 12, à l'extérieur et autour de l'orifice de fixation 25, du côté opposé à la caisse 11.

On peut considérer que la portion de caisse 11 définit une première portion de tôle à assembler, et le carénage 12 définit une deuxième portion de tôle à assembler.

Sur la figure 1 sont dessinés comme repères des directions "x" et "r", La direction axiale x, correspond à une direction d'insertion de la pièce de fixation 10 au travers du carénage 12 et de la caisse 11.

En un point donné de la pièce 10, on peut définir une direction radiale locale r, perpendiculaire à la direction axiale x.

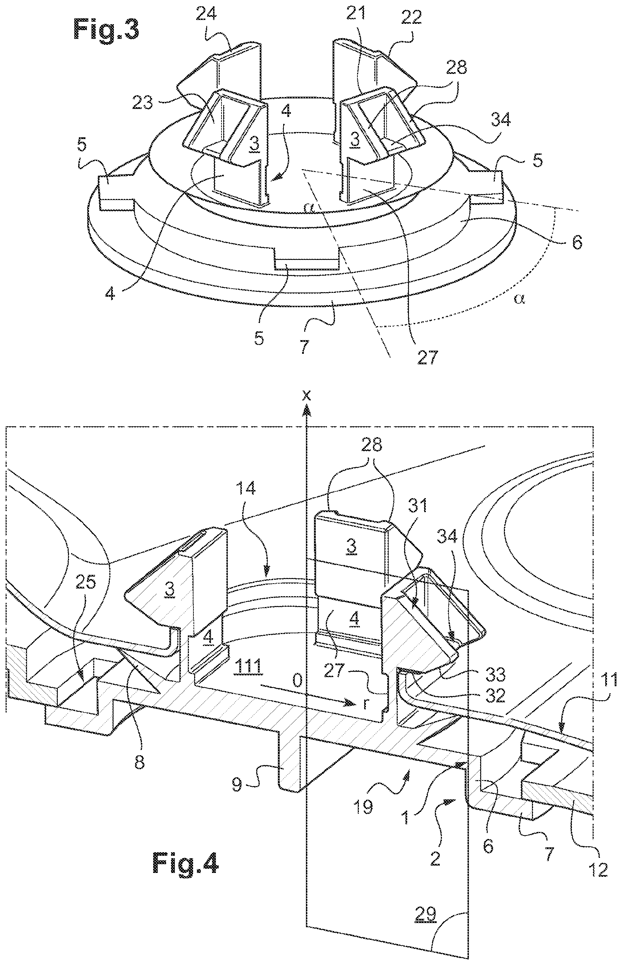

La pièce 10 comporte une portion cylindrique de centrage 6, s'étendant axialement entre la portion d'appui 7 et des appendices radiaux de verrouillage 5, visibles sur la figure 3, mais non visibles sur la figure 2.

La portion d'appui 7 est élargie radialement par rapport à la portion de centrage 6.

Comme visible sur la figure 3, les appendices de verrouillage 5, ici au nombre de 4, s'étendant radialement, à angle droit les uns par rapport aux autres, à partir de la portion cylindrique de centrage 6.

Les appendices de verrouillage 5, permettent d'effectuer un verrouillage de type un huitième de tour par rapport au carénage 12, après l'insertion de la pièce 10 au travers du carénage 12.

L'orifice de fixation 25 du carénage 12 comporte en effet une découpe adaptée pour ce type de verrouillage, laissant passer au travers du carénage les appendices 5 pour une première position angulaire de la pièce de fixation 10 (position angulaire mesurée comme une rotation autour de la direction axiale "x"), et retenant axialement ces appendices 5 pour une position angulaire de la pièce 10 décalée par exemple de 45° par rapport à la position d'insertion précédente.

Pour revenir à la figure 2, la portion cylindrique de centrage 6 s'étend entre une première extrémité axiale 1 destinée à se placer entre la première tôle 11 de la caisse et la deuxième tôle 12 du carénage, et une seconde extrémité axiale 2, restant à l'extérieur de la deuxième tôle 12 du carénage, du côté opposé à la première tôle. La seconde extrémité axiale 2 comprend la portion d'appui 7, s'étendant radialement à partir de la portion de centrage 6.

La première extrémité axiale 1 de la pièce 10, est fermée dans le mode de réalisation illustré par plan de fermeture d'extrémité, référencé 111.

La pièce 10 comporte ici, s'élevant à partir du plan d'extrémité 111, une coupelle 8 formant joint d'étanchéité et s'étendant en direction de la portion de caisse 11. Ainsi la portion de plan de fermeture 111, et la coupelle d'étanchéité 8, permettent d'assurer une fermeture étanche de l'ouverture polygonale 14 lorsque la coupelle 8 vient en appui contre la portion de caisse 11, tout autour de l'ouverture polygonale 14.

On peut envisager des variantes de réalisation (non représentées) sans coupelle d'étanchéité et/ou sans plan de fermeture, par exemple si l'on souhaite un assemblage démontable entre deux tôles, sans exigences particulières d'étanchéité de l'assemblage.

La portion cylindrique de centrage 6 peut être prolongée par un cylindre fictif 16 autour d'un axe central (O, x) de la pièce 10.

La pièce de fixation 10 comporte plusieurs organes de fixation configurés pour s'accrocher sur la première tôle 11, sur la face de la première tôle opposée à la deuxième tôle.

La coupelle d'étanchéité 8, ainsi que ces organes de fixation 21, 22, 23, 24, s'étendant à partir de la première extrémité 1 de la portion de centrage 6 en direction de la portion de caisse 11, de manière à rester chacun inscrit à l'intérieur du cylindre fictif 16.

Ainsi, lorsque le pièce de fixation 10, par sa première extrémité, est insérée au travers de la deuxième tôlé puis au travers de la première tôle, la coupelle et les organes de fixation 21, 22, 23, 24 peuvent traverser sans subir de déformation, et sans limiter la progression axiale de la pièce, l'orifice 25 de la deuxième tôle.

Les organes de fixation comprennent dans les exemples illustrés sur les figures, quatre pattes de clipsage 21, 22, 23, 24.

Chacune de ces pattes de clipsage comprend une base de patte 4 surmontée d'un ergot de verrouillage 3. Les ergots de verrouillage 3 sont tournés radialement vers l'extérieur -à partir des bases 4 axiales des pattes- et s'étendent à une distance radiale leur permettant de venir se verrouiller sur le contour de l'ouverture polygonale 14 une fois cette ouverture franchie par les ergots, quelle que soit la positon angulaire de la pièce 10 centrée sur l'ouverture polygonale 14.

Les pattes de clipsage 21, 22, 23, 24, de par leur distance à l'axe central (O,x) de la pièce de fixation, et de par la forme des ergot de verrouillage 3, sont conçues de manière à être défléchies vers l'axe central, lorsque les pattes sont insérées au travers de l'ouverture polygonale 14.

L'orifice 25 de la deuxième tôle et l'ouverture polygonale 14 de la première tôle sont placées et orientées de manière à venir se superposer dans une position telle que, lorsque les appendices de verrouillage 5 sont en cours de franchissement de l'ouverture 25, les pattes de clipsage 21, 22, 23, 24 font face chacune à l'un des coins arrondis de l'ouverture polygonale 14 -ou selon d'autres modes de réalisation, par exemple à un bords tronqués du carré- c'est-à-dire dans une position de franchissement de l'ouverture 14 impliquant une déflexion de moindre amplitude des pattes de clipsage, parmi les déflexions des pattes permettant le franchissement de l'ouverture 14.

Chacun des ergots 3 peut comporter une première surface oblique déflectrice 18, formant la surface d'appui des ergots sur des bords de l'ouverture polygonale 14 lors de l'insertion de la pièce, pour défléchir les pattes de clipsage lors de l'insertion.

Dans cette position, le profil des ergots 3 comporte en outre une seconde portion de surface 30, formant une rampe oblique 30 tendant à induire une déflexion vers l'axe central de la patte de clipsage, lorsque l'on tire sur la pièce pour l'extraire de l'ouverture polygonale 14.

La seconde surface oblique ou surface oblique de libération 30, est inclinée en sens opposé à la première surface oblique 18, et est destinée à s'appuyer sur les bords de l'ouverture polygonale 14 lors de l'extraction de la pièce.

Dans une position tournée de 45° par rapport à la précédente direction d'insertion, la forme des ergots 3 est en outre conçue pour l'ergot vienne en appui contre le bord de l'ouverture 14, en l'occurrence contre le bord tombé 26 entourant l'ouverture polygonale 14, par une surface de rétention de clipsage 20 perpendiculaire à la direction axiale (O,x). Selon des variantes de réalisation non représentées, la surface de rétention de clipsage 20 peut former un angle inférieur à 90° avec l'axe central de (O,x) de la pièce.

La distance radiale par rapport à l'axe (O,x), de la frontière entre la surface de rétention 20 et la surface de libération 30 est de préférence choisie de manière à ce que la surface de rétention 20 vienne en appui sur le bord tombé dans une position angulaire de verrouillage de la pièce (par exemple les ergots faisant face aux centres des côtés du carré minimal dans lequel s'inscrit l'ouverture 14), et de manière à ce que ce soit au contraire la surface oblique de libération 30 qui vienne en appui sur le bord tombé lorsque la pièce est tournée d'un huitième de tour par rapport à la direction précédente.

La pièce de fixation 10 peut typiquement être réalisée par injection d'un matériau polymère, de manière à former une pièce monobloc.

Pour être aisément réalisable par injection, la forme de chacune des pattes de clipsage 21, 22, 23, 24 peut comporter avantageusement une première lame support 27 formant la base de la patte 4, à l'extrémité de laquelle s'étendent radialement vers l'extérieur des lames de verrouillage 28 perpendiculaires à la lame support 27. La lame support 27 est de direction axiale. Elle se dresse à partir de la première extrémité de la portion de centrage. La lame support 27 est perpendiculaire à un plan géométrique radial 29 interceptant la lame support. On peut désigner par (O,r) une direction radiale de ce plan 29.

Chacune des lames de verrouillage 28 peut comporter un premier bord oblique 31 contribuant à former la première surface oblique déflectrice 18 de l'ergot 3, comporter un deuxième bord perpendiculaire 32, contribuant à former la surface de rétention de clipsage 20 de l'ergot 3.

Dans certains modes de réalisation, chacune des lames de verrouillage 28 peut en outre comporter un troisième bord ou bord de libération 33 contribuant à former la surface oblique de libération 30 de l'ergot 3.

La lame support 27 peut avantageusement présenter une portion amincie 13, entre la base de la patte à l'extrémité 1 de la portion de centrage, et l'ergot 3, de manière améliorer la flexibilité radiale de la patte, tout en conservant une rigidité suffisante de la portion formant ergot de verrouillage.

Selon un mode de réalisation préféré, le premier bord oblique 31 peut typiquement former avec la direction axiale un angle γ typiquement inférieur à 45°. Le bord de libération 33 peut typiquement former avec la direction axiale un angle Δ de préférence supérieur à y, et typiquement comprise entre 10 et 45°. L'angle β entre le deuxième bord 32 et la direction axiale est de préférence égal à 90 ° mais peut éventuellement être inférieur à 90° par exemple être compris entre 70 et 90°.

A l'intérieur du volume défini par la portion de centrage 6, peut être ménagé un creux central 19 entouré par la portion d'appui 7. Dans ce creux central 19 peut s'élever un relief transversal 9 permettant de manipuler la pièce de fixation 10 pour lui imprimer un couple lors de sa mise en place, et placer les appendices de verrouillage 5 ainsi que les pattes de clipsage 21, 22, 23, 24, 25 en position de verrouillage, respectivement en position de verrouillage maximal.

Typiquement la pièce de fixation 10 peut être injectée en un seul matériau, offrant un bon compromis entre tenue mécanique globale et souplesse de la coupelle 8, par exemple un polypropylène chargé en élastomère, par exemple chargé en élastomère de type EPDM (éthylène propylène diène monomère).

Selon d'autres variantes de réalisation on peut imaginer une pièce monobloc, obtenue par surmoulage d'un premier matériau polymère relativement rigide formant la majeure partie de la pièce, par exemple polyamide ou polypropylène chargé ou non de fibres de verre, en surmoulant la coupelle 8 en un matériau élastomère.

La figure 3 en perspective permet d'avoir une vue d'ensemble de la pièce, indépendamment des tôles à assembler.

On retrouve sur la figure 3 des éléments communs à la figure 2, les mêmes éléments étant désignés par les mêmes références. On note par exemple sur la figure 3 que les lames de verrouillage 28 de chacun des ergots de verrouillage 3, sont reliées chacune par une portion de plan de liaison 34 qui contribue à augmenter la surface formant la surface de rétention de clipsage 20, et qui contribue également à la rigidité globale de l'ergot 3, qui présente ainsi une forme de 'caisson' ouvert.

La figure 4 illustre, en perspective partielle la pièce de fixation 10 vue tout en laissant deviner au niveau de la tôle de carénage 12 -qui peut être réalisée par exemple en matériau composite à base polymère-, les contours de l'orifice de fixation 25, dont sont complémentaires les contours de la pièce 10 à la position axiale des appendices de verrouillage 5.

On retrouve sur la figure 4 les mêmes éléments que sur les figures 2 et 3, les mêmes éléments étant désignés par les mêmes références.

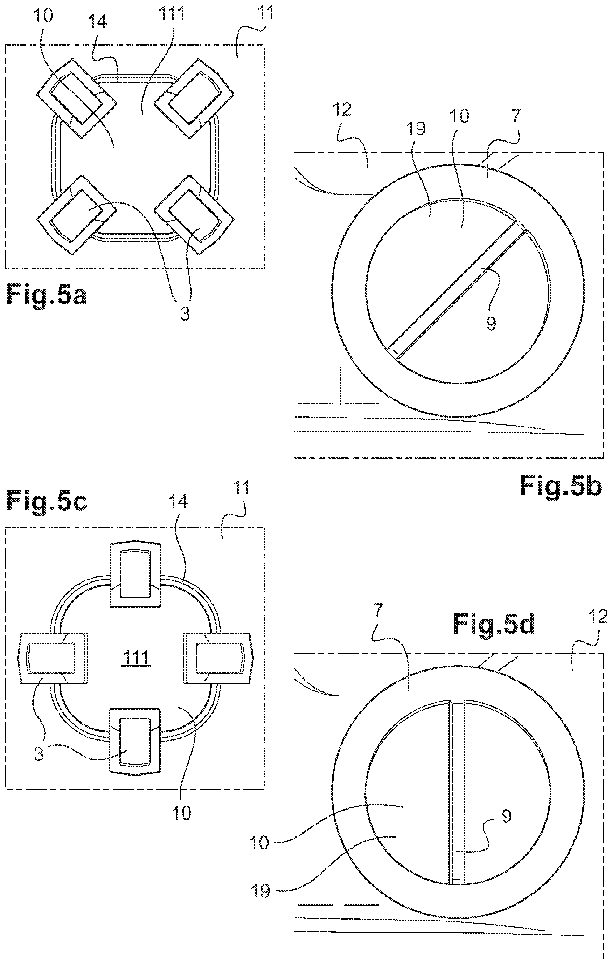

Les figures 5a à 5d permettent enfin de visualiser les positions de la pièce 10, en position d'insertion puis en position verrouillée.

Les figures 5a 5b montrent la pièce 10, respectivement côté pattes de clipsage et côté couronne d'appui, juste après son insertion au travers des tôles 12 et 11.

Les figures 5c et 5d, montrent la pièce 10, respectivement côté pattes de clipsage et côté couronne d'appui, juste après que l'on ait fait pivoter la pièce de fixation d'un huitième de tour pour la verrouiller par rapport aux ouvertures des tôles 11 et 12. Les références indiquées correspondent aux mêmes éléments que ceux illustrés sur les autres figures. On suppose que la tôle 11 garde la même orientation, et la même orientation par rapport aux axes de la figure, sur les figures 5a et 5c.

On suppose que la tôle 12 garde la même orientation, et la même orientation par rapport aux axes de la figure, sur les figures 5b et 5d.

L'invention ne se limite pas aux exemples de réalisation décrits et peut se décliner en de nombreuses variantes.

La pièce de fixation peut ne pas être conçue pour assurer une fonction d'étanchéité, et peut dans ce cas ne pas comporter de coupelle 8 et/ou ne pas comporter de plan de fermeture 111.

Les ergots peuvent être réalisés autrement que sous forme de structures de type caisson, par exemple sous forme d'une ou plusieurs lames radiales s'étendant perpendiculairement à chaque base de patte.

On peut également envisager des variantes de réalisation avec des ergots formant des structures pleines, attachées à des pattes flexibles.

En fonction de l'ordre de symétrie de l'ouverture polygonale 14, le nombre de pattes de clipsage peut varier, par exemple peut être compris entre 2 et 6 pattes.

Le nombre de pattes de clipsage peut être différent du nombre d'appendices de verrouillage.

Avantageusement, le nombre de pattes correspond cependant au nombre d'appendices de verrouillage, car l'angle de verrouillage doit pouvoir assurer un bon verrouillage, d'une part pour le verrouillage assuré par les appendices, et d'autre part pour le verrouillage par les pattes de clipsage.

La pièce de fixation selon l'invention permet de limiter le nombre d'orifices à percer au travers des tôles ou des pièces planes à assembler.

L'arrangement de tôle avec pièce de fixation selon l'invention permet d'assurer simultanément des fonctions d'étanchéité et d'assemblage, et limite le nombre de références à gérer.

La pièce de fixation est conçue pour pouvoir être prépositionnée sur l'une ou l'autre tôle au besoin, en préparation pour l'assemblage.

Même lorsque la pièce se déverrouille accidentellement, si aucune force n'est exercée pour l'extraire, elle reste accrochée à la portion de caisse sur laquelle elle est clipsée.

## Revendications

1. Ensemble d'une première tôle (11), d'une deuxième tôle (12) et d'une pièce de fixation (10), la première tôle (11) comportant une ouverture polygonale (14), la deuxième tôle (12) comportant un orifice (25), la pièce de fixation étant conçue pour être insérée successivement au travers de l'orifice (25) de la deuxième tôle (12) et au travers de l' ouverture polygonale (14) de la première tôle (11) et pour obtenir, par un mouvement de type portion de tour par rapport à la première et à la deuxième tôle, un assemblage démontable tôle sur tôle, la pièce de fixation comprenant :
- une portion cylindrique de centrage (6) s'étendant axialement entre une première extrémité (1) et une deuxième extrémité (2) de la portion de centrage (6),
- un groupe d'au moins deux pattes de clipsage (21, 22, 23, 24) s'étendant axialement (x) à partir de la première extrémité (1), les pattes de clipsage (21, 22, 23, 24) portant des ergots de verrouillage (3) tournés radialement vers l'extérieur,
- une portion d'appui (7), s'étendant radialement à partir de la deuxième extrémité (2) de la portion de centrage,
- la pièce comportant en outre, un groupe d'au moins deux appendices de verrouillage (5) s'étendant radialement à partir de la première extrémité (1) de la portion de centrage, la portion d'appui (7) comportant au moins deux zones de retenue s'étendant radialement vers l'extérieur de la portion de centrage, chacune sur au moins un secteur angulaire situés entre les appendices de verrouillage (5), les pattes de clipsage (21, 22, 23, 24) étant incluses dans un volume cylindrique de même direction axiale que la portion cylindrique de centrage (6), le contour géométrique de ce volume cylindrique étant obtenu en superposant le contour de la portion de centrage (6) et le contour des appendices de verrouillage (5), de manière à pouvoir insérer successivement les pattes et la portion de centrage au travers de l'orifice(25) de la deuxième tôle (12) sans subir de déformation et sans limiter la progression axiale de la pièce, l'ouverture polygonal (14) et les ergots verrouillage (3) étant en outre définis de sorte que, lorsque les appendices de verrouillage (5) sont ensuite en cours de franchissement de l'orifice (25) de la deuxième tôle , les pattes de clipsage (21, 22, 23, 24) sont dans une position de franchissement de l'ouverture polygonale (14) impliquant une déflexion de moindre amplitude des pattes de clipsage, qu'au moins une autre valeur de déflexion qui serait imposée aux pattes par l'ouverture polygonale dans une autre position angulaire du groupe de pattes de clipsage par rapport à l'ouverture polygonale.

2. Ensemble selon la revendication précédente, dans lequel chaque patte de clipsage (21, 22, 23, 24) comporte une base de patte (4) sensiblement axiale, flexible pour être déviée radialement, et comporte à une extrémité libre de la patte de clipsage (21, 22, 23, 24), un ergot (3) de verrouillage, chaque ergot (3) de verrouillage présentant, orientées radialement vers l'extérieur :
- au moins une première surface oblique déflectrice (18), convergeant vers l'axe (O,x) de la pièce (10) dans le sens en allant vers l'extrémité libre de la patte,
- au moins une surface de rétention de clipsage (20), se projetant axialement sous la première surface oblique déflectrice (18), et au niveau de laquelle l'ergot (3) forme, en section par un plan axial, un angle rentrant avec la base (4) de la patte.

3. Ensemble selon la revendication précédente, dans lequel les ergots de verrouillage (3) des pattes présentent en outre chacun une surface oblique de libération (30), la surface oblique de libération (30) prolongeant radialement vers l'extérieur la surface de rétention de clipsage (20), et s'évasant en direction de l'extrémité libre de la patte de clipsage.

4. Ensemble selon l'une des revendications 2 ou 3, la pièce d'assemblage comprenant en outre une portion d'accostage (8) axialement compressible, s'étendant à partir de la première extrémité axiale (1) de la portion de centrage (6) autour des pattes de clipsage (21, 22, 23, 24), dans un périmètre limité par le périmètre de la portion cylindrique de centrage (6), la portion d'accostage (8) pouvant traverser l'orifice (25) sans subir de déformation et sans limiter la progression axiale de la pièce.

5. Ensemble selon la revendication 4, dans lequel la portion d'accostage axialement compressible (8) forme une coupelle sensiblement tronconique autour de l'ensemble des pattes de clipsage (21, 22, 23, 24).

6. Ensemble selon l'une quelconque des revendications 2 à 5, dans lequel chaque patte de clipsage (21, 22, 23, 24) comporte :
- une lame support (27) de direction axiale se dressant à partir de la première extrémité (1) de la portion de centrage (6), la lame support (27) étant perpendiculaire à un plan géométrique radial (29) interceptant la lame support (27),
- au moins une lame de verrouillage (28) de direction axiale, s'étendant perpendiculairement à partir de la lame support (27) à l'extrémité libre de la lame support, la lame de verrouillage (28) présentant un premier bord oblique (31) définissant au moins une portion de la première surface oblique déflectrice (18) de la patte, et présentant un deuxième bord (32) perpendiculaire à la lame support (27), le deuxième bord perpendiculaire définissant au moins une portion de la surface de rétention de clipsage (20) de la patte de clipsage.

7. Ensemble de dessous de caisse pour véhicule automobile, comprenant un ensemble selon la revendication précédente la périodicité de l'ouverture polygonale (14) de la première tôle correspondant au nombre de pattes de clipsage (21, 22, 23, 24) de la pièce de fixation (10),
- et l'orifice (25) de la deuxième tôle (12) étant une ouverture (25) adaptée au verrouillage de la deuxième tôle, de type par portion de tour, entre les appendices de verrouillage (5) et la portion d'appui (7) de la pièce de fixation (10).

8. Ensemble de dessous de caisse de véhicule selon la revendication 7, dans lequel la première tôle (11) est une portion de châssis du véhicule, la deuxième tôle (12) est un carénage destiné à protéger la caisse par l'extérieur, et dans lequel la pièce de fixation (10) est conçue pour venir assembler la deuxième tôle (12) sous la première tôle (11) en insérant la pièce de fixation (10) par-dessous le véhicule, au travers de la deuxième tôle (12) puis au travers de la première tôle (11).

9. Procédé d'assemblage d'un carénage (12) de dessous de caisse (11) automobile, comprenant les étapes suivantes :
- fournir un châssis de véhicule présentant une portion de tôle (11) percée d'une ouverture polygonale,
- fournir une coque (12) destinée à protéger, au moins localement, la portion de tôle (11), et comportant une ouverture (25) à découpes radiales, l'ouverture à découpes radiale comprenant une portion de découpe centrale plus large que l'ouverture polygonale (14), et l'ouverture à découpes radiales (25) comportant des découpes s'étendant radialement à partir de la découpe centrale,
- fournir une pièce de fixation (10) complétant la première et la deuxième tôle pour former un ensemble selon l'une quelconque des revendications précédentes,
- superposer l'ouverture à découpes radiales (25) avec l'ouverture polygonale (14),
- introduire la pièce de fixation (10) au travers de l'ouverture à découpes radiales (25) de manière à faire passer les appendices de verrouillage (5) au travers des ouvertures radiales, et à faire passer les pattes de clipsage (21, 22, 23, 24), au travers de l'ouverture polygonale (14),
- tourner la pièce de fixation (10) d'une portion de tour autour d'un axe central (O,x) de la pièce, de manière à amener les appendices de verrouillage (5) dans une position angulaire dans laquelle ils ne peuvent plus traverser l'ouverture à découpe radiale (25).

## Patentansprüche

1. Anordnung aus einem ersten Blech (11), einem zweiten Blech (12) und einem Befestigungsstück (10), wobei das erste Blech (11) eine polygonale Öffnung (14) beinhaltet, wobei das zweite Blech (12) eine Öffnung (25) beinhaltet, wobei das Befestigungsstück dazu gestaltet ist, nacheinander durch die Öffnung (25) des zweiten Blechs (12) hindurch und durch die polygonale Öffnung (14) des ersten Blechs (11) hindurch eingesetzt zu werden und um, durch eine Bewegung von der Art eines Umdrehungsabschnitts in Bezug auf das erste und das zweite Blech, eine zerlegbare Blech-auf-Blech-Montage zu erhalten, wobei das Befestigungsstück umfasst:
- einen zylindrischen Zentrierungsabschnitt (6), der sich axial zwischen einem ersten Ende (1) und einem zweiten Ende (2) des Zentrierungsabschnitts (6) erstreckt,
- eine Gruppe aus mindestens zwei Schnapplaschen (21, 22, 23, 24), die sich axial (x) von dem ersten Ende (1) aus erstrecken, wobei die Schnapplaschen (21, 22, 23, 24) Verriegelungsnasen (3) tragen, die radial nach außen gewandt sind,
- einen Auflageabschnitt (7), der sich radial von dem zweiten Ende (2) des Zentrierungsabschnitts aus erstreckt,
- wobei das Stück ferner eine Gruppe aus mindestens zwei Verriegelungsfortsätzen (5) beinhaltet, die sich radial von dem ersten Ende (1) des Zentrierungsabschnitts aus erstrecken, wobei der Auflageabschnitt (7) mindestens zwei Rückhaltebereiche beinhaltet, die sich radial nach außerhalb des Zentrierungsabschnitts erstrecken, jeweils über mindestens einen Winkelsektor, die zwischen den Verriegelungsfortsätzen (5) gelegen sind, wobei die Schnapplaschen (21, 22, 23, 24) in einem zylindrischen Volumen mit der gleichen axialen Richtung wie der zylindrische Zentrierungsabschnitt (6) enthalten sind, wobei die geometrische Kontur dieses zylindrischen Volumens erhalten wird, indem die Kontur des Zentrierungsabschnitts (6) und die Kontur der Verriegelungsfortsätze (5) überlagert werden, so dass nacheinander die Laschen und der Zentrierungsabschnitt durch die Öffnung (25) des zweiten Blechs (12) hindurch eingesetzt werden können, ohne eine Verformung zu erfahren und ohne das axiale Fortschreiten des Stücks zu begrenzen, wobei die polygonale Öffnung (14) und die Verriegelungsnasen (3) ferner so definiert sind, dass, wenn die Verriegelungsfortsätze (5) anschließend dabei sind, die Öffnung (25) des zweiten Blechs zu überwinden, die Schnapplaschen (21, 22, 23, 24) in einer Position des Überwindens der polygonalen Öffnung (14) sind, was eine Ablenkung mit geringerer Amplitude der Schnapplaschen beinhaltet als mindestens ein anderer Ablenkungswert, der den Laschen durch die polygonale Öffnung in einer anderen Winkelposition der Schnapplaschengruppe in Bezug auf die polygonale Öffnung vorgegeben würde.

2. Anordnung nach dem vorhergehenden Anspruch, bei der jede Schnapplasche (21, 22, 23, 24) eine im Wesentlichen axiale Laschenbasis (4) beinhaltet, die flexibel ist, um radial verlagert zu werden, und an einem freien Ende der Schnapplasche (21, 22, 23, 24) eine Verriegelungsnase (3) beinhaltet, wobei jede Verriegelungsnase (3) aufweist, radial nach außerhalb ausgerichtet:
- mindestens eine erste schräge ablenkende Fläche (18), die zur Achse (O,x) des Stücks (10) in Richtung zum freien Ende der Lasche hin konvergiert,
- mindestens eine Schnapprückhaltefläche (20), die axial unter der ersten schrägen ablenkenden Fläche (18) vorspringt und an der die Nase (3), im Querschnitt durch eine axiale Ebene, einen einspringenden Winkel mit der Basis (4) der Lasche bildet.

3. Anordnung nach dem vorhergehenden Anspruch, bei der die Verriegelungsnasen (3) der Laschen ferner jeweils eine schräge Freigabefläche (30) aufweisen, wobei die schräge Freigabefläche (30) radial nach außen die Schnapprückhaltefläche (20) verlängert und sich in Richtung des freien Endes der Schnapplasche aufweitet.

4. Anordnung nach einem der Ansprüche 2 oder 3, wobei das Montagestück ferner einen axial komprimierbaren Anlegeabschnitt (8) umfasst, der sich vom ersten axialen Ende (1) des Zentrierungsabschnitts (6) aus um die Schnapplaschen herum (21, 22, 23, 24) in einem durch den Umfang des zylindrischen Zentrierungsabschnitts (6) begrenzten Umfang erstreckt, wobei der Anlegeabschnitt (8) die Öffnung (25) durchdringen kann, ohne eine Verformung zu erfahren und ohne das axiale Fortschreiten des Stücks zu begrenzen.

5. Anordnung nach Anspruch 4, bei welcher der axial komprimierbare Anlegeabschnitt (8) einen im Wesentlichen kegelstumpfförmigen Napf um sämtliche Schnapplaschen (21, 22, 23, 24) herum bildet.

6. Anordnung nach einem der Ansprüche 2 bis 5, bei der jede Schnapplasche (21, 22, 23, 24) beinhaltet:
- ein Trägerblatt (27) von axialer Richtung, das sich vom ersten Ende (1) des Zentrierungsabschnitts (6) aus aufrichtet, wobei das Trägerblatt (27) rechtwinklig zu einer radialen geometrischen Ebene (29) ist, die das Trägerblatt (27) schneidet,
- mindestens ein Verriegelungsblatt (28) von axialer Richtung, das sich rechtwinklig vom Trägerblatt (27) aus am freien Ende des Trägerblatts erstreckt, wobei das Verriegelungsblatt (28) eine erste schräge Kante (31) aufweist, die mindestens einen Abschnitt der ersten schrägen ablenkenden Fläche (18) der Lasche definiert, und eine zweite Kante (32) aufweist, die rechtwinklig zum Trägerblatt (27) ist, wobei die rechtwinklige zweite Kante mindestens einen Abschnitt der Schnapprückhaltefläche (20) der Schnapplasche definiert.

7. Unterbodenanordnung für ein Kraftfahrzeug, umfassend eine Anordnung nach dem vorhergehenden Anspruch, wobei die Periodizität der polygonalen Öffnung (14) des ersten Blechs der Anzahl von Schnapplaschen (21, 22, 23, 24) des Befestigungsstücks (10) entspricht und wobei die Öffnung (25) des zweiten Blechs (12) eine Öffnung (25) ist, die zur Verriegelung des zweiten Blechs, von der Art eines Umdrehungsabschnitts, zwischen den Verriegelungsfortsätzen (5) und dem Anlageabschnitt (7) des Befestigungsstücks (10) geeignet ist.

8. Fahrzeugunterbodenanordnung nach Anspruch 7, bei der das erste Blech (11) ein Chassisabschnitt des Fahrzeugs ist, wobei das zweite Blech (12) eine Verkleidung ist, die dazu bestimmt ist, die Karosserie von außen zu schützen, und bei der das Befestigungsstück (10) dazu gestaltet ist, das zweite Blech (12) unter dem ersten Blech (11) zu montieren, indem das Befestigungsstück (10) von der Unterseite des Fahrzeugs aus durch das zweite Blech (12) hindurch und dann durch das erste Blech (11) hindurch eingesetzt wird.

9. Verfahren zur Montage einer Verkleidung (12) eines Fahrzeugunterbodens (11), umfassend die folgenden Schritte:
- Bereitstellen eines Fahrzeugchassis, das einen Blechabschnitt (11) aufweist, der von einer polygonalen Öffnung durchbrochen ist,
- Bereitstellen einer Schale, (12), die dazu bestimmt ist, den Blechabschnitt (11) mindestens lokal zu schützen, und eine Öffnung (25) mit radialen Ausschnitten beinhaltet, wobei die Öffnung mit radialen Ausschnitten einen zentralen Ausschnittabschnitt umfasst, der breiter als die polygonale Öffnung (14) ist, und wobei die Öffnung mit radialen Ausschnitten (25) Ausschnitte beinhaltet, die sich radial vom zentralen Ausschnitt aus erstrecken,
- Bereitstellen eines Befestigungsstücks (10), welches das erste und das zweite Blech ergänzt, um eine Anordnung nach einem der vorhergehenden Ansprüche zu bilden,
- Überlagern der Öffnung mit radialen Ausschnitten (25) mit der polygonalen Öffnung (14),
- Einführen des Befestigungsstücks (10) durch die Öffnung mit radialen Ausschnitten (25) hindurch derart, dass die Verriegelungsfortsätze (5) durch radiale Öffnungen geführt werden und die Schnapplaschen (21, 22, 23, 24) durch die polygonale Öffnung (14) hindurch geführt werden,
- Drehen des Befestigungsstücks (10) um einen Umdrehungsabschnitt um eine zentrale Achse (O, x) des Stücks, so dass die Verriegelungsfortsätze (5) in eine Winkelposition gebracht werden, in der sie die Öffnung mit radialem Ausschnitt (25) nicht mehr durchdringen können.

## Claims

1. Assembly of a first sheet (11), of a second sheet (12) and of a fastening part (10), the first sheet (11) including a polygonal opening (14), the second sheet (12) including an orifice (25), the fastening part being designed to be inserted successively through the orifice (25) in the second sheet (12) and through the polygonal opening (14) in the first sheet (11) and to obtain, through movement of the portion-of-a-turn type with respect to the first and to the second sheet, a sheeton-sheet dismountable assembly, the fastening part comprising:
- a centring cylindrical portion (6) extending axially between a first end (1) and a second end (2) of the centring portion (6),
- a group of at least two clipping tabs (21, 22, 23, 24) extending axially (x) from the first end (1), the clipping tabs (21, 22, 23, 24) carrying locking toes (3) facing radially outwards,
- a bearing portion (7), extending radially from the second end (2) of the centring portion,
- the part further including a group of at least two locking appendages (5) extending radially from the first end (1) of the centring portion, the bearing portion (7) including at least two retaining zones extending radially towards the outside of the centring portion, each over at least one angular sector and located between the locking appendages (5), the clipping tabs (21, 22, 23, 24) being included in a cylindrical volume with the same axial direction as the centring cylindrical portion (6), the geometric contour of this cylindrical volume being obtained by superimposing the contour of the centring portion (6) and the contour of the locking appendages (5), so that the tabs and the centring portion can be successively inserted through the orifice (25) in the second sheet (12) without undergoing deformation, and without limiting the axial progression of the part, the polygonal opening (14) and the locking toes (3) being further defined so that, when the locking appendages (5) are then in the process of clearing the orifice (25) in the second sheet, the clipping tabs (21, 22, 23, 24) are in a position of clearing the polygonal opening (14) involving a lesser-amplitude deflection of the clipping tabs than at least one other value of deflection that might be imposed on the tabs by the polygonal opening if the group of clipping tabs were in another angular position with respect to the polygonal opening.

2. Assembly according to the preceding claim, wherein each clipping tab (21, 22, 23, 24) includes a substantially axial tab base (4), flexible such as to be radially deflected, and includes, at a free end of the clipping tab (21, 22, 23, 24), a locking toe (3), each locking toe (3) having, oriented radially outwards:
- at least one first deflecting oblique surface (18), converging towards the axis (O,x) of the part (10) in the direction towards the free end of the tab,
- at least one clipping retention surface (20), projecting axially below the first deflecting oblique surface (18), and at which the toe (3) forms, in section via an axial plane, a reentrant angle with the base (4) of the tab.

3. Assembly according to the preceding claim, wherein the locking toes (3) of the tabs further each have a release oblique surface (30), the release oblique surface (30) extending, radially outwards, the clipping retention surface (20), and flaring out in the direction of the free end of the clipping tab.

4. Assembly according to either of Claims 2 and 3, the assembly part further comprising an axially compressible docking portion (8), extending from the first axial end (1) of the centring portion (6) around the clipping tabs (21, 22, 23, 24), in a perimeter limited by the perimeter of the centring cylindrical portion (6), the docking portion (8) being able to pass through the orifice (25) without undergoing deformation, and without limiting the axial progression of the part.

5. Assembly according to Claim 4, wherein the axially compressible docking portion (8) forms a substantially truncated-cone-shaped cup around all of the clipping tabs (21, 22, 23, 24).

6. Assembly according to any one of Claims 2 to 5, wherein each clipping tab (21, 22, 23, 24) includes:
- an axial-direction support blade (27) standing upright from the first end (1) of the centring portion (6), the support blade (27) being perpendicular to a radial geometric plane (29) intersecting the support blade (27),
- at least one axial-direction locking blade (28), extending perpendicularly from the support blade (27) at the free end of the support blade, the locking blade (28) having an oblique first edge (31) defining at least one portion of the first deflecting oblique surface (18) of the tab, and having a second edge (32) perpendicular to the support blade (27), the perpendicular second edge defining at least one portion of the clipping retention surface (20) of the clipping tab.

7. Motor vehicle body underside assembly, comprising an assembly according to the preceding claim, the periodicity of the polygonal opening (14) of the first sheet corresponding to the number of clipping tabs (21, 22, 23, 24) of the fastening part (10),
- and the orifice (25) in the second sheet (12) being an opening (25), suitable for the action of locking the second sheet, of the type using a portion of a turn, between the locking appendages (5) and the bearing portion (7) of the fastening part (10).

8. Vehicle body underside assembly according to Claim 7, wherein the first sheet (11) is a chassis frame portion of the vehicle, the second sheet (12) is a shield intended to protect the body via the outside, and wherein the fastening part (10) is designed to assemble the second sheet (12) under the first sheet (11) by inserting the fastening part (10) from beneath the vehicle, through the second sheet (12) and then through the first sheet (11).

9. Method for assembling an automotive body (11) underside shield (12), comprising the following steps:
- providing a vehicle chassis frame having a sheet portion (11) pierced with a polygonal opening,
- providing a shell (12) intended to protect, at least locally, the sheet portion (11), and including an opening (25) with radial cutouts, the opening with radial cutouts comprising a central cutout portion that is wider than the polygonal opening (14), and the opening with radial cutouts (25) including cutouts extending radially from the central cutout,
- providing a fastening part (10) that complements the first and the second sheet in order to form an assembly according to any one of the preceding claims,
- superimposing the opening with radial cutouts (25) with the polygonal opening (14),
- introducing the fastening part (10) through the opening with radial cutouts (25) so as to cause the locking appendages (5) to pass through the radial openings, and cause the clipping tabs (21, 22, 23, 24) to pass through the polygonal opening (14),
- turning the fastening part (10) by a portion of a turn about a central axis (O, x) of the part, so as to bring the locking appendages (5) into an angular position in which they are no longer able to pass through the opening with radial cutouts (25).
